(19) **Europäisches Patentamt**

**European Patent Office**

**Office européen des brevets**

(11) **EP 1 370 071 B1**

(12) **EUROPÄISCHE PATENTSCHRIFT**

(45) Veröffentlichungstag und Bekanntmachung des Hinweises auf die Patenterteilung:
**14.09.2005   Patentblatt 2005/37**

(51) Int Cl.⁷: **H04N 1/60**

(21) Anmeldenummer: **02016231.9**

(22) Anmeldetag: **19.07.2002**

(54) **Optimierung von Bilddaten durch Farbmanagement**

Optimization of digital image data using color management

Optimisation de données d'image par gestion de couleurs

(84) Benannte Vertragsstaaten:
**CH DE FR GB IT LI**

(30) Priorität: **06.06.2002  EP 02012379**

(43) Veröffentlichungstag der Anmeldung:
**10.12.2003   Patentblatt 2003/50**

(73) Patentinhaber: **Imaging Solutions AG**
**8105 Regensdorf (CH)**

(72) Erfinder:
• **Meier, Roland**
**5000 Aarau (CH)**
• **Zolliker, Peter**
**8157 Dielsdorf (CH)**
• **Heimgartner, Erwin**
**5400 Baden (CH)**

(74) Vertreter: **Schwabe - Sandmair - Marx**
**Stuntzstrasse 16**
**81677 München (DE)**

(56) Entgegenhaltungen:
**EP-A- 1 014 698          WO-A-98/58493**
**US-A- 5 696 839**

• **BERETTA G B: "METHOD FOR ESTIMATING COLOR GAMUT MAPPING ON A DISPLAY DEVICE" XEROX DISCLOSURE JOURNAL, XEROX CORPORATION. STAMFORD, CONN, US, Bd. 17, Nr. 3, 1. Mai 1992 (1992-05-01), Seiten 171-174, XP000271722**

**Beschreibung**

Die vorliegende Erfindung betrifft die Verarbeitung von Bilddaten, um eine möglichst optimale Farbwiedergabe zu erzielen. Die Erfindung betrifft insbesondere das Gebiet der Fotografie, das heißt die Bilddaten stellen insbesondere fotografische Bilder dar, wie sie durch Fotokameras, Videokameras, Digitalkameras etc. gewonnen werden. Die Bilddaten werden zur Ansteuerung von Bilddarstellungssystemen, wie beispielsweise Fotoprintern, Fotolabors, Minilabs, Monitore (Flüssigkristallmonitore und CRT-Monitore) usw., verwendet. Die vorliegende Erfindung dient dazu, den Farbeindruck der Bilder, die durch das Bilddarstellungssystem z.B. auf einem Medium (Papier, Fotopapier, Folie etc.) oder einem Schirm (Monitor) dargestellt werden, zu verbessern. Die Erfindung dient insbesondere dazu, den durch ein Eingangsgerät (beispielsweise Scanner, Digitalkamera etc.) erfassbaren Farbraum (Eingangs-Gamut) mit dem durch das Bilddarstellungssystem darstellbaren Farbraum (Ausgangs-Gamut) auf der Ausgangsseite abzustimmen, wenn der Eingangs-Gamut mit dem Ausgangs-Gamut nicht übereinstimmt. Die vorliegende Erfindung betrifft also die Verarbeitung von Bilddaten, die von einem Eingangsgerät erfasst wurden und in einem geräteabhängigen Farbraum vorliegen, so dass sie durch ein Bilddarstellungssystem, das ebenfalls einen geräteabhängigen Farbraum festlegt, möglichst optimal ausgegeben werden kann.

Ein Beispiel für das oben beschriebene Anwendungsgebiet der vorliegenden Erfindung stellt die Verarbeitung von sRGB-Bilddaten dar, die beispielsweise von einer

Digitalkamera ausgegeben werden und die von einem Bilddarstellungssystem (beispielsweise Fotoprinter oder Minilab) so verarbeitet werden, dass das Bild, das durch die Bilddaten dargestellt wird, beispielsweise mit Hilfe eines Fotopapiers erzeugt wird.

Der sRGB-Farbraum und sein Zusammenhang z.B. mit dem XYZ-Farbraum ist beispielsweise in "The Creation of the sRGB ICC Profile" von Mary Nielsen und Michael Stokes, Hewlett-Packard Company, Boise, Idaho, USA, in Color Research Nr. 568, S. 253-257, 1998, beschrieben. Der sRGB-Farbraum ist aus den folgenden Gründen besonders beliebt:

a) Die Übertragungsfunktion und die Chromatizität der primären Phosphorfarben von Kathodenstrahlröhren (CRT-Monitoren) ähneln dem sRGB-Farbraum sehr. Bilder können also in vernünftiger Qualität auf Monitoren gezeigt werden, ohne dass eine Abbildung der Farben mittels eines Profils zusätzlich erforderlich ist. Der sRGB-Farbraum ist inzwischen so allgemein üblich, dass sogar in Technikfeldern, deren Übertragungsfunktionen stark von sRGB abweichen, wie beispielsweise LCD-Monitore oder Plasmamonitore, diese immer noch die Bilddateneingabe über eine sRGB-Schnittstelle unterstützen.

b) Die Hersteller von digitalen Scannern, Monitoren und Digitalkameras stellen häufig als weiteres Merkmal ihrer Gerät bereit, dass diese sRGB-Bilddaten ausgeben.

c) Nahezu alle Computerprogramme, die herkömmlich erhältlich sind, unterstützen sRGB-ähnliche Farbräume.

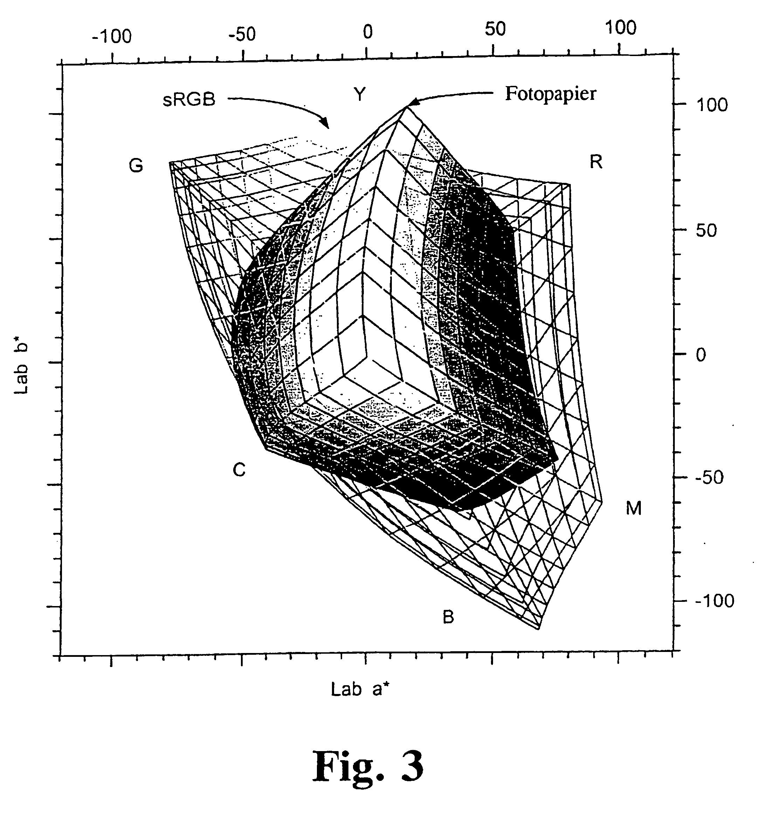

Unglücklicherweise sind der sRGB-Farbraum und der Farbraum des Fotopapiers (z.B. Silberhalogenidpapier) deutlich unterschiedlich (siehe Fig. 3). Weite Gebiete des sRGB-Farbraums, insbesondere die hellen gesättigten Farben, befinden sich außerhalb des Gamut des Fotopapiers. Umgekehrt scheitert ein Monitor üblicherweise daran, die dunklen, gesättigten Farben des Fotopapiers zu reproduzieren.

Um die Spanne der durch das Eingangsgerät erfassbaren Farben (Eingangs-Gamut) an die Spanne der durch das Bilddarstellungssystem darstellbaren Farben (Ausgangs-Gamut) anzupassen, werden derzeit die folgenden zwei Verfahren eingesetzt:

1. Die sRGB-Daten werden einfach als Bildsteuerdaten verwendet, um das Bilddarstellungssystem anzusteuern. Mit anderen Worten werden die sRGB-Koordinaten als RGB-Koordinaten zur Ansteuerung eines Druckers über dessen RGB-Eingang interpretiert und eingesetzt. Dieses Verfahren ist extrem einfach und gewährleistet, dass sämtliche druckbaren Farben des Druckers ausgenutzt werden können (wenn der Wertebereich der sRGB-Koordinaten mit dem Wertebereich der RGB-Koordinaten übereinstimmt).

2. Der klassische Ansatz des Farbmanagements wird eingesetzt. Hinsichtlich Farbmanagement wird beispielsweise auf "Appendix A: Colorimetry" in "Digital Color Management" von E. J. Giorgianni & T. E. Maddon, Addison-Wesley, Massachusetts, 1997, S. 440-445, (ISBN 0-201-63426-0), verwiesen. Das Prinzip einer vorrichtungsunabhängigen Plattform, das einen zentralen Punkt des Farbmanagements (Color Management) ausmacht, ist ebenfalls in dem Artikel "Color Management: Current Practice and the Adoption of a New Standard" von Michael Has und Todd Newman beschrieben, der unter der Internetadresse http://www.color.org/wpaperl.html beschrieben ist. Gemäß dem klassischen Farbmanagementansatz werden die eingegebenen sRGB-Koordinaten in Farbkoordinaten einer Farbraumplattform (im Folgenden abgekürzt als PCS für "Profile Connection Space") transformiert. Vorzugsweise ist die Farbraumplattform ein vorrichtungsunabhängiger Farbraum. Vorzugsweise umfasst also der Gamut der Farbraumplattform alle möglichen oder real gegebenen Gamuts der Eingangsgeräte und Ausgangsgeräte. Ein Bild wird mit einem gegebenen Gamut in der Farbraumplattform (PCS) auf den Soll-Farbraum abgebildet und dann in RGB-Vorrichtungskoordinaten der Ausgabevorrichtung (Bilddarstellungsvorrichtung) konvertiert.

Neben den oben genannten bekannten Verfahren wäre auch noch folgendes Verfahren denkbar:

3. Man beginnt mit einer vorgegebenen Farbpalette oder Testszenerie. Man erfasst die Farbpalette oder Testszenerie sowohl mittels eines herkömmlichen Fotoapparats mit Film als auch mit einem digitalen Bilderfassungssystem (beispielsweise Digitalkamera oder Scanner). Dann verarbeitet man die Daten, wobei bei der herkömmlichen Fotografie analoge Techniken und bei der digitalen Bilderfassung digitale Verfahren angewendet werden. Man vergleicht die beiden Ergebnisse und erzeugt ein Profil, um so die digital erfassten Daten soweit zu ändern, bis ein Ausdruck basierend auf den digitalen Daten dem Ausdruck des analogen Systems (herkömmliche Fotografie) entspricht.

Jedoch hat jedes der oben genannten Verfahren seine Schwäche:

1. Das Verfahren 1 verletzt Grundsätze des Farbmanagements. Eines der wesentlichen Grundsätze des Farbmanagements ist, eine Farbwahrnehmung zu erzielen, die möglichst nahe der Farbwahrnehmung des Originalbildes kommt. Aber zwischen dem sRGB-Farbraum und dem Drucker-Farbraum gibt es starke Verschiebungen und Verzerrungen. Sie sind gegeneinander verdreht und verdrillt. Das Verfahren 1 bildet jedoch einfach Ecken auf Ecken des jeweiligen Farbraums ab. Dadurch werden der Farbton, die Sättigung und Helligkeit überhaupt nicht durch die Abbildung bewahrt. Dies führt zu einer Farbwiedergabe, die nur wenig mit dem Farbeindruck des Originalbildes zu tun hat. Wie die Erfinder erkannt haben, hat dieser Lösungsansatz zur Folge, dass die Farbeigenschaften des fotografischen Papiers erkennbar sind. Beispielsweise wird das grünliche Gelb einer Zitrone, das der gelben Ecke des sRGB-Farbraums entspricht, auf dem Fotopapier zu Orange. In ähnlicher Weise wird das grelle Monitorgrün in ein dunkles Grün auf dem Fotopapier abgebildet. Zusammengefasst hat dieses Verfahren mit Standardfarbmanagementgrundsätzen wenig gemein. Der Benutzer wird mit dem tatsächlichen Farbmanagement allein gelassen. Er muss die Daten vor der Eingabe in den Drucker manuell vorverarbeiten, um die gewünschten Farben erzielen zu können.

2. Der sRGB-Farbraum enthält viele hochgesättigte, sehr helle Farben, die mit einem Fotopapier nicht darstellbar sind. Die Erfinder haben erkannt, dass Standardfarbmanagementprogramme gemäß dem obigen Verfahren 2 zwischen der Erhaltung des Farbtons, der Sättigung und der Helligkeit einen Kompromiss finden müssen. Dabei werden diese hellen, stark gesättigten Farben auf sehr helle Pastellfarben abgebildet. Obwohl dies mathematisch korrekt ist, ist dies häufig nicht die Farbe, die ein Betrachter erwarten würde. Dies gilt insbesondere bei Grafiken oder farbigen Texten. Wenn große Bereiche des sRGB-Farbraums außerhalb des durch das Papier darstellbaren Teils des Farbraums, also außerhalb des Farb-Gamuts des Fotopapiers, sind, werden weite Bereiche des sRGB-Gamuts auf einen kleinen Bereich komprimiert, wenn nach der Abbildung des sRGB-Gamuts in die Farbraumplattform (PCS) die unvermeidbare Gamut-Kompression bei der Gamut-Abbildung in den Farbraum der Ausgabevorrichtung (Bilddarstellungssystem bzw. Drucker) erfolgt. Diese Komprimierung erheblicher Teile des sRGB-Gamuts führt zu einem Verlust an Konturen, besonders bei hellen, hochgesättigten Farben. Auf der anderen Seite deckt der sRGB-Gamut, also der von den sRGB-Daten aufspannbare Farbraum nur einen Teil des Fotopapier-Gamuts, also der durch das Fotopapier darstellbaren Farben ab, und zwar in dem Bereich dunkler Farben. Diese dunklen Farben treten im sRGB-Farbraum des Eingangsgeräts nicht auf und werden somit bei dem Verfahren nach Punkt 2 niemals für einen Ausdruck genutzt. Mit anderen Worten wird ein beträchtlicher Teil des zur Verfügung stehenden Fotopapier-Gamuts bzw. Drucker-Gamuts nicht genutzt.

3. Die Erfinder haben festgestellt, dass das dritte Verfahren bessere Farbwiedergabeergebnisse bereitstellt als die Verfahren 1 und 2, und zwar im Fall der Wiedergabe digitaler Bilddaten (die beispielsweise auf einem digitalen Medium gespeichert sind) auf einem Fotopapier. Das Verfahren 3 ist jedoch schwer zu verallgemeinern und ziemlich unflexibel. Das Verfahren 3 erfordert die Verwendung eines konkreten Fotopapiers und einer konkreten Farbkarte. Dabei wird angenommen, dass das konkret verwendete Fotopapier ein allgemein gültiges Referenzpapier darstellt und die auf der Farbkarte dargestellten Farben alle möglichen Farben abdecken. Jedoch hat zumindest jedes konkrete Fotopapier seine Vor- und Nachteile, ist also nicht optimal. Da das Verfahren auf Messungen beruht, kann die Farbtransformation nicht parametrisiert werden und somit auf andere Fälle, insbesondere auf andere Fotopapiere angepasst werden. Dies liegt insbesondere daran, dass die Farbtransformation Blackbox-Eigenschaften hat.

Aus US 5,583,666 ist ein Verfahren zur geräteübergreifenden Farbkalibrierung bekannt. Dabei wird ein Eingangsfarbraum in einen Ausgangsfarbraum transformiert, wo eine jede Farbe einer spezifischen Farbkalibrierung unterzogen wird. Dabei werden Bedingungen auf einen Untersatz von Punkten in dem Eingangsfarbraum angewendet, die explizit die Transformation in den Ausgangsfarbraum spezifizieren. Weiter werden die übrigen Punkte dann durch eine Abbildungsstrategie transformiert, die die Farbkontinuität bewahrt.

Aufgabe der Erfindung ist es, ein Verfahren bereitzustellen, um von einem Eingangsgerät stammende Bilddaten so zu verarbeiten, dass sie im Hinblick auf eine möglichst optimale Farbwiedergabe durch ein Ausgangsgerät flexibel angepasst werden. Weiter soll ein entsprechendes Programm sowie ein Computerspeichermedium oder Computer mit dem Programm geschaffen werden sowie ein Fotoprinter oder Fotolabor, bei dem das Verfahren zum Einsatz kommt.

Vorstehende Aufgabe wird durch die Gegenstände der Ansprüche 1, 9, 10 und 11 gelöst.

Erfindungsgemäß werden Bilddaten verarbeitet, die erste Positionen in einem ersten Farbraum, wie z.B. sRGB, CIEXYZ, CIELAB usw., darstellen. Bevorzugt handelt es sich um sRGB-Bilddaten. Die ersten Positionen werden dann sowohl einer Transformation unterzogen als auch in ein Modell eingebracht. Ob zuerst das Einbringen in das Modell erfolgt oder zuerst die Transformation vorgenommen wird, ist beliebig, auch kann beides parallel oder gleichzeitig durchgeführt werden.

Durch die Transformation werden die ersten Positionen in so genannte Transformationspositionen transformiert. Dabei werden die durch die Bilddaten dargestellten Farbwerte vorzugsweise unverändert oder nur gering geändert beibehalten. Die Transformationspositionen stellen Positionen in einem zweiten Farbraum dar, bei dem es sich beispielsweise um CIELAB, CIEXYZ oder sRGB handeln kann. Vorzugsweise unterscheidet sich der zweite Farbraum vom ersten Farbraum, insbesondere wenn der erste Farbraum vorrichtungsabhängig ist, und es handelt sich beim zweiten Farbraum vorzugsweise um einen vorrichtungsunabhängigen Farbraum, wie beispielsweise CIELAB oder CIEXYZ. Die Transformation erfolgt vorzugsweise gemäß einer vorgegebenen mathematischen Vorschrift, vorzugsweise einer analytischen Vorschrift. Auch eine Transformation basierend auf Nachschlagtabellen (LUTs) ist denkbar.

Vorzugsweise erfolgt die Transformation so, dass alle durch die Bilddaten darstellbaren ersten Positionen im ersten Farbraum auf eine Transformationsposition im zweiten Farbraum transformiert werden. Vorzugsweise spannen die möglichen ersten Positionen denselben Farbraum (Gamut) auf wie die sich aus der Transformation der möglichen ersten Positionen ergebenden möglichen Transformationspositionen. Vorzugsweise ist die Transformation reversibel oder bijektiv. Vorzugsweise entspricht zumindest in etwa z.B. unter der Annahme bestimmter Betrachtungsbedingungen, wie beispielsweise dem Öffnungswinkel und der Spektralverteilung der Beleuchtung, jeder Farbwert (oder zumindest ein Großteil der Farbwerte), der durch eine erste Position im ersten Farbraum dargestellt wird, dem Farbwert, der durch die entsprechende Transformationsposition dargestellt wird.

Vorzugsweise ist der zweite Farbraum so gestaltet, dass er dem Farbraum des Ausgangsgeräts (beispielsweise Bilddarstellungssystem) mehr ähnelt als der erste Farbraum. Eine größere Ähnlichkeit bedeutet insbesondere, dass mehr Farbwerte des Ausgangsgeräts im zweiten Farbraum darstellbar sind als im ersten Farbraum und dass der Bereich der mit dem Ausgangsgerät nicht darstellbaren Farben möglichst gering gehalten wird. Bevorzugt sind alle Farbwerte des Ausgangsgeräts auch im zweiten Farbraum darstellbar.

Vorzugsweise ist der Gamut des zweiten Farbraums (Referenz-Farb-Gamut) dem Ausgangs-Farb-Gamut oder einer Vereinigungsmenge vorbestimmter Ausgang-Farb-Gamuts zumindest ähnlich. Hierbei bedeutet Ähnlichkeit, dass die Gamuts umso ähnlicher sind, je kleiner die resultierende Differenzmenge ist. Die Differenzmenge kann beispielsweise als Volumendifferenz der beiden verglichenen Gamuts bestimmt werden. Dabei kann die Volumendifferenz beispielsweise mittels CIE Lab-Koordinaten bestimmt werden. Vorzugsweise ist die Volumendifferenz zwischen dem Referenz-Gamut und dem Ausgang-Gamut oder der Vereinigungsmenge der vorbestimmten Ausgang-Gamuts kleiner als 30%, 10%, 5% oder 1% des Volumens des Referenz-Gamuts.

Vorzugsweise wird für die Transformation zwischen dem ersten Farbraum (beispielsweise sRGB) zu dem zweiten Farbraum (beispielsweise Lab) eine Transformation verwendet, für die eine analytische Lösung existiert.

Die Bilddaten werden nicht nur in Transformationspositionen transformiert, sondern vorzugsweise auch einem Modellbilddarstellungssystem zugeführt, um so Modellpositionen zu erhalten. Die Modellpositionen beschreiben Positionen vorzugsweise in demselben zweiten Farbraum wie in dem vorgenannten. Ein Modellbilddarstellungssystem ist in EP-A-1 227 659 offenbart. Beispielsweise können die Bilddaten dem folgenden Verfahren zum Modellieren eines Bilddarstellungssystems unterzogen werden, um die Modellpositionen zu erhalten:

Es handelt sich dabei um ein Verfahren zum Modellieren von Bildern, die durch Lichtmodulatoren dargestellt werden, die die Intensität des einfallenden Lichts spektral entsprechend Lichtmodulationswerten modulieren, wobei ein Modellbilddarstellungssystem in Antwort auf Bildsteuerdaten (Bilddaten) die Lichtmodulationswerte der Lichtmodulatoren bestimmt, wobei das Verfahren insbesondere die folgenden Schritte umfasst:

a) die Lichtmodulationswerte der für die Bilddarstellung verwendeten Lichtmodulatoren werden basierend auf den eingegebenen Bildsteuerdaten (Bilddaten) durch Modellierung der Antwort des Modellbilddarstellungssystems auf die eingegebenen Bildsteuerdaten (Bilddaten) berechnet, und/oder

b) Modulationsfarbwerte, die die Farbwerte des durch die Lichtmodulatoren dargestellten Bildes beschreiben, das sich bei Lichteinfall auf die Lichtmodulatoren ergibt, werden basierend auf den berechneten Lichtmodulationswerten errechnet.

Um mit den vorgenannten Verfahren die Bilddaten in Modellpositionen umzuwandeln, werden die Bilddaten als Bildsteuerdaten in das Verfahren eingegeben. Hat das Modellbilddarstellungssystem beispielsweise einen Eingang für Bildsteuerdaten im z. B. RGB-Format und liegen die Bildsteuerdaten im z. B. sRGB-Format vor, werden z. B. die sRGB-Daten vom Modellbilddarstellungssystem als RGB-Daten interpretiert. Weiter entsprechen die Modellpositionen den Positionen in dem zweiten Farbraum, die die Modulationsfarbwerte beschreiben.

Das oben genannte Modellierungsverfahren betrifft insbesondere die Modellierung fotografischer Bilder, die in Form von Lichtmodulatoren dargestellt werden. Bei Lichtmodulatoren handelt es sich beispielsweise um Farbstoffe oder Interferenzfilter, wobei die Lichtdurchlässigkeit durch die Interferenzfilter beispielsweise mit Flüssigkristallen steuerbar ist. Lichtmodulatoren modulieren oder ändern die Intensität des einfallenden Lichtes und modulieren oder ändern das Spektrum des einfallenden Lichts. Lichtmodulatoren reflektieren, absorbieren und/oder transmittieren das einfallende Licht, wobei das einfallende Licht wellenlängenabhängig reflektiert, absorbiert und/oder transmittiert wird. Absorptions-, Reflexions- wie auch Transmissionseigenschaften sind im Allgemeinen wellenlängenabhängig.

Das bei der Erfindung eingesetzte Modellierungsverfahren betrifft insbesondere ein Verfahren, um zu Modellieren, wie ein Bild für einen Betrachter oder ein Messgerät mit mehreren definierten Farbkanälen aussieht, wobei das Bild durch ein Bilddarstellungssystem hergestellt wird, dass das Bild mittels Lichtmodulatoren erzeugt und das durch gegebene Bilddaten (Bildsteuerdaten) angesteuert wird. Dabei können die Bilddaten direkt die Lichtmodulatoren (z.B. die Elemente eines LCD-Displays) ansteuern oder indirekt die Generierung von Lichtmodulatoren bewirken (z.B. die Generierung von Farbstoffen durch Ansteuern einer Belichtungseinheit mit den Bilddaten, wobei die Belichtungseinheit Fotopapier belichtet; oder das Spritzen von Farbtinte auf Papier).

Durch das Modellierungsverfahren können insbesondere Bilddarstellungssysteme modelliert werden, die aus einer Bilddarstellungsvorrichtung (z.B. Drucker) und einem Medium (z.B. Papier) bestehen, wobei die Bilddarstellungsvorrichtung insbesondere die Lichtmodulatoren in dem Medium erzeugt (z.B. Fotopapierbelichtung) oder auf dieses aufbringt (z.B. Tintenstrahldrucken oder Farblaserdrucken). Dabei kann das Medium reflektiv und/oder transmittiv (z. B. Folie) sein und das Bild somit in Reflexion oder Transmission betrachtet werden.

Das Modellierungsverfahren betrifft auch die Modellierung von Bilddarstellungssystemen, bei denen die Lichtmodulatoren nicht erzeugt werden, sondern bereits zu Beginn ihre Lichtmodulationseigenschaften aufweisen und zur Bilddarstellung angeordnet sind, wie dies beispielsweise bei einem Feld aus Interferenzfiltern gekoppelt mit Lichtintensitätsmodulatoren (beispielsweise Flüssigkristallen oder LCD-Display) der Fall ist.

Das Modellierungsverfahren betrifft insbesondere die Farbmodellierung eines auf einem Medium (z.B. Fotopapier oder mit Farbe bedruckbarem Normalpapier) mittels Farbstoff dargestellten Fotobildes und insbesondere die Anwendung des Modells bei einem Verfahren, das auf Grund gegebener Bilddaten (Bildsteuerdaten) die Farbwerte des Fotobildes bestimmt, die die Farbwerte des vom Bild reflektierten transmittierten und/oder absorbierten Lichts beschreiben, wenn das Bild durch das Bilddarstellungssystem erzeugt wird. Die Bilddaten dienen zur Steuerung der Bilddarstellungsvorrichtung, die ein Bild auf einem Bildmedium (beispielsweise Fotopapier) mittels Farbstoffen erzeugt. Die Farbwerte beschreiben insbesondere die von einem (Standard-)Menschen wahrgenommenen Farben des Bildes, wobei das Bild z.B. in Reflexion oder Transmission betrachtet wird. Mittels den Farbwerten werden Spektren durch diskrete Werte dargestellt. Üblicherweise werden entsprechend dem menschlichen Auge drei Werte verwendete. Vorzugsweise werden die Farbwerte aus den Spektren durch Falten mit Funktionen gewonnen, die z.B. die Empfindlichkeitskurven des menschlichen Auges darstellen. Sie können aber auch durch Faltung mit anderen Funktionen gewonnen werden, wie z.B. bei der Gewinnung von ANSI-A-Farbwerten. Die dabei verwendeten Funktionen sind schmalbandiger als die Empfindlichkeitskurven des menschlichen Auges und entsprechen insbesondere den Empfindlichkeitskurven eines Farbdichtemessgeräts.

Die vorliegende Erfindung betrifft Drucker oder Printer, insbesondere Fotolabors. Insbesondere betrifft die Erfindung Minilabs, aber auch Großlabors und Geräte für Großlabors, die das erfindungsgemäße Verfahren einsetzen. Die Erfindung betrifft insbesondere das Gebiet der Fotografie sowie die Verarbeitung von fotografischen Bilddaten. Die Bilddaten können wie üblich zweidimensional sein, sie können aber auch dreidimensional sein, wie dies beispielsweise bei Hologrammen der Fall ist.

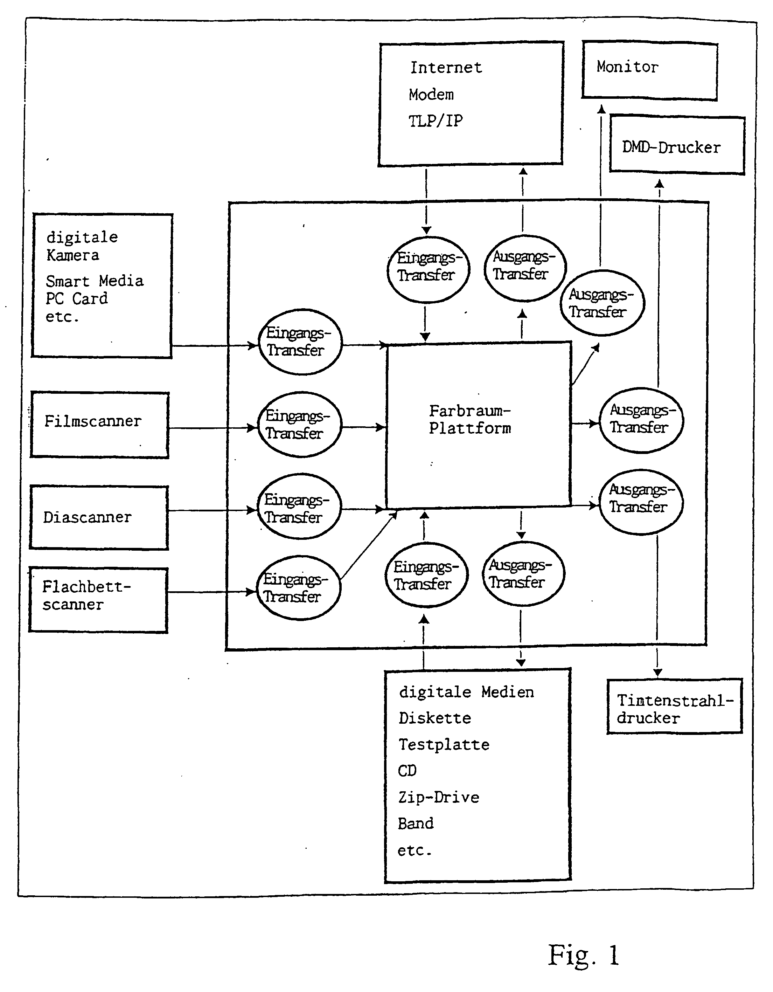

Die erfindungsgemäßen Fotolabors, Drucker oder Printer können Daten auf vielfältige Art und Weise, beispielsweise über verschiedene Eingangskanäle, empfangen und insbesondere über verschiedene Ausgangskanäle verteilen. Die Eingabegeräte können z.B. Datenträger wie Disketten, CD, DVD, Memory Sticks, Memory Cards, Festplatten usw. als Datenträger empfangen. Sie können natürlich auch Scanner enthalten, um insbesondere herkömmliche Filme abzutasten, um so die Bilddaten zu gewinnen. Als Ausgabegeräte dienen insbesondere Drucker oder Belichtungsgeräte, die beispielsweise mit DMD (Digital Mirror Devices) oder Tintenstrahldruckern arbeiten. Auch können die verarbeiteten Bilddaten digital z.B. über das Internet ausgegeben werden oder auf einem Datenträger, wie beispielsweise einer CD oder DVD, gespeichert werden (siehe Figur 1).

Wie bereits oben erwähnt, wird als zweiter Farbraum vorzugsweise eine Farbraumplattform oder ein Profilverbindungsraum (PCS bzw. "Profile Connection Space") verwen-Standard bekannt, der als eine Plattform zur Konversion von Farbdaten dient. Ziel ist es dabei, die vorrichtungsspezifischen Farbdaten in einen vorrichtungsunabhängigen Farbraum zu konvertieren, von dem aus dann wiederum in andere vorrichtungsspezifische Farbräume transformiert werden kann. Vorzugsweise wird bei dem erfindungsgemäßen Verfahren ebenfalls ein vorrichtungsunabhängiger Farbraum als zweiter Farbraum verwendet.

Hinsichtlich des Modellierungsverfahrens werden basierend auf der vorgenannten EP 1 227 659 A1 noch folgende Informationen gegeben. Die im oben genannten Modellierungsverfahren erwähnten Lichtmodulationswerte beschreiben die Lichtmodulation durch die Lichtmodulatoren und stehen vorzugsweise in direktem Zusammenhang zu den Bilddaten. Dieser Zusammenhang basiert vorzugsweise auf einer Modellierung des funktionalen Zusammenhangs zwischen den in das Bilddarstellungssystem eingegebenen Bilddaten und den charakteristischen (modellierten) physikalischen Eigenschaften des Bilddarstellungssystems. Insbesondere ist der Lichtmodulationswert ein Maß dazu, wie stark ein bestimmter Lichtmodulator zur gesamten Lichtmodulation beiträgt. Ein Lichtmodulationswert beschreibt beispielsweise die Stärke der Farbstoffbildung im Fotopapier und/oder die Konzentration des erzeugten Farbstoffs. Der Lichtmodulationswert kann auch die Reflexionseigenschaft des Mediums berücksichtigen, auf dem sich der Farbstoff befindet. Bei dem Modellierungsverfahren werden die Lichtmodulationswerte basierend auf einem Modell berechnet, das die Antwort eines Bilddarstellungssystems auf Bilddaten (Bildsteuerdaten) modelliert. Deswegen wird dieses Modell auch als "Modellbilddarstellungssystem" bezeichnet.

Sind nun erfindungsgemäß die Transformationspositionen und die Modellpositionen bestimmt, so werden vorteilhaft aus diesen zweite Positionen im zweiten Farbraum bestimmt. Diese zweiten Positionen werden vorteilhaft so bestimmt, dass sie Vorteile und/oder Eigenschaften des Transformationsverfahrens und des Modellierungsverfahrens beinhalten. Die zweiten Positionen können dann von dem erfindungsgemäßen Verfahren ausgegeben werden oder können als Grundlage für eine weitere Verarbeitung dienen. Die weitere Verarbeitung kann insbesondere darin bestehen, die zweiten Positionen in Bilddaten (optimierte Bilddaten) zu transformieren. Die transformierten (optimierten) Bilddaten stellen vorzugsweise Positionen in einem dritten Farbraum dar. Vorzugsweise ist der dritte Farbraum an ein Ausgabegerät angepasst, das durch die verarbeiteten Bilddaten (optimierte Bilddaten) angesteuert werden soll.

Die Bestimmung der zweiten Positionen erfolgt vorzugsweise durch eine Verknüpfungsvorschrift oder Mischungsvorschrift, die die Transformationspositionen mit den Modellpositionen verknüpft oder vermischt, um die zweiten Positionen zu erhalten. Bei dieser Verknüpfung oder Vermischung können auch die den zweiten Positionen entsprechenden ersten Positionen und insbesondere ihre Lage (z. B. definiert durch Abstände) im ersten Farbraum berücksichtigt werden. Vorzugsweise ist die Verknüpfungsvorschrift oder Vermischungsvorschrift abhängig von der Position der ersten Positionen im ersten Farbraum und/oder von der Position der Transformationspositionen, Modellpositionen und/oder zweiten Positionen (im zweiten Farbraum), die an der Vermischung oder Verknüpfung teilnehmen. Das heißt, je nach Position (im ersten und/oder zweiten Farbraum) findet vorzugsweise eine andere Verknüpfung oder Vermischung statt. Je nach Position (im ersten und/oder zweiten Farbraum) kann beispielsweise die zweite Position vollständig mit einer Transformationsposition übereinstimmen, so dass die entsprechende Modellposition bei der Vermischung ohne Einfluss war, oder die zweite Position kann vollständig mit einer Modellposition übereinstimmen, so dass die entsprechende Transformationsposition bei der Vermischung ohne Einfluss war. Vorzugsweise werden diejenigen Transformationspositionen und Modellpositionen zu zweiten Positionen verknüpft, die aus denselben Bilddaten (das heißt den entsprechenden ersten Positionen) hervorgehen. Alternativ oder zusätzlich kann beispielsweise nicht nur eine Modellposition und eine Transformationsposition, die aus derselben ersten Position gewonnen werden, verknüpft werden, sondern können beispielsweise auch Transformationspositionen oder Modellpositionen, die aus der zu der (entsprechenden) ersten Position im Bild lokal benachbarten ersten Position hervorgehen, beispielsweise mit einem mit dem Abstand zu der ersten Position abnehmendem Gewicht in die Verknüpfungsvorschrift bzw. Mischungsvorschrift zur Bestimmung einer zweiten Position mit einfließen.

Ein wesentlicher Vorteil bei dem erfindungsgemäßen Verfahren ist, dass Eigenschaften des Ausgabegeräts, die durch die Modellpositionen dargestellt werden, mit Eigenschaften des Eingabegeräts, die durch die Transformationspositionen dargestellt werden, verknüpft werden, um so, beispielsweise je nach Geschmack des Benutzers, zweite Positionen finden, die als optimaler Ausgangspunkt für Bilddaten (Bildsteuerdaten) angesehen werden. Vorzugsweise gibt es also eine eindeutige Zuordnung (Entsprechung) zwischen den eingegebenen Bilddaten (ersten Positionen) und den zweiten Positionen, so dass jedem Bilddatum eine zweite Position zugeordnet wird, vorzugsweise also die Umwandlung der Bilddaten in die zweiten Positionen zumindest surjektiv ist. Sie kann auch bijektiv sein, um insbesondere das Verfahren reversibel zu gestalten.

Vorzugsweise sind die in das Verfahren eingegebenen Bilddaten so gestaltet, dass sie einen bestimmten Werteraum aufspannen. Beispielsweise handelt es sich um sRGB-Daten mit drei Wertekanälen (R, G und B), deren Werte jeweils über eine Wertespanne von beispielsweise 0 bis 255 laufen können. Der zugehörige Steuerwerteraum ist also dreidimensional und die Wertespanne jeder Dimension läuft von 0 bis 255. Das Modelbilddarstellungssystem ist vorzugsweise an den Steuerwerteraum der eingegebenen Bilddaten angepasst. Das Modellbilddarstellungssystem ist z. B. nun vorzugsweise so gestaltet, dass bei Eingabe aller möglichen Bilddaten (die den gesamten Steuerwerteraum aufspannen) alle oder zumindest fast alle durch das Modellbilddarstellungssystem darstellbaren Farbwerte erzeugt werden. Modelliert das Modellbilddarstellungssystem beispielsweise einen Drucker (Ausgabegerät), der einen RGB-Eingang aufweist, so wird das Modellbilddarstellungssystem vorzugsweise so gestaltet, dass die R-, G- und B-Kanäle vollständig oder zumindest fast vollständig durch die Bilddaten (des Eingabegeräts) ausgesteuert werden, wenn alle möglichen im Steuerwerteraum annehmbaren Bilddaten eingegeben werden. Dies kann beispielsweise einfach so erzielt werden, indem die sRGB-Daten des Eingabegeräts als RGB-Daten für das Modellbilddarstellungssystem (modelliertes Ausgabegerät) interpretiert werden und die einzelnen Kanäle des Eingabegeräts und des modellierten Ausgabegeräts die gleiche Steuerwertespanne oder Bitwerttiefe (beispielsweise 0 bis 255) aufweisen.

Durch die vorgenannte Gestaltung des Modellbilddarstellungssystems, die auf den Steuerwerteraum der (empfangenen) Bilddaten abgestimmt ist, wird gewährleistet, dass die Modellpositionen den Gamut des Modellbilddarstellungssystems voll ausnutzen können, also das Modellbilddarstellungssystem hinsichtlich seiner Farbdarstellungsmöglichkeiten voll aussteuerbar ist.

Dies gewährleistet im Gegensatz zu den herkömmlichen Verfahren, dass z.B. bei der Modellierung eines Fotoprinters mit Fotopapier die dunklen Farben, die im sRGB-Farbraum nicht vorhanden sind, durch die Modellpositionen beschrieben werden können. Der Gamut des Fotopapiers kann also besser ausgenutzt werden.

Wie bereits oben ausgeführt, führt das Modellierungsverfahren dazu, dass alle möglichen Modellpositionen den Gamut des Ausgabegeräts widerspiegeln, während alle möglichen Transformationspositionen den Gamut des Eingabegeräts widerspiegeln. Der Teil des zweiten Farbraums, der alle möglichen Transformationspositionen umfasst, wird als "Transformationsteil" bezeichnet. Der Teil des zweiten Farbraums, der alle möglichen Modellpositionen umfasst, wird als "Modellteil" des zweiten Farbraums bezeichnet. Werden in das erfindungsgemäße Verfahren nun Bilddaten eingegeben, die alle möglichen Werte eines Steuerwerteraums annehmen, so führt die Transformation dazu, dass der Transformationsteil im zweiten Farbraum aufgespannt wird und die Modellierung führt dazu, dass der Modellteil im zweiten Farbraum aufgespannt wird. Der Transformationsteil und der Modellteil überlappen sich üblicherweise, wobei derjenige Teil, in dem sie sich überlappen, als "Überlappungsteil" bezeichnet wird.

Wie bereits oben erwähnt, wird die Verknüpfung oder Vermischung der Modellpositionen und der Transformationspositionen vorzugsweise positionsabhängig vorgenommen (also insbesondere in Abhängigkeit von der Transformationsposition, der Modellposition und/oder der zweiten Position). Diese Positionsabhängigkeit der Transformation wird erfindungsgemäß vorzugsweise auf (prägnante) Teile, z.B. Unterräume, Abschnitte oder Punkte des zweiten Farbraums, des Transformationsteils, des Modellteils und/oder des Überlappungsteils begründet. Beispielsweise wird die Positionsabhängigkeit auf die Grauachse, auf einen Abschnitt der Grauachse oder auf einen Punkt auf der Grauachse bezogen. Weitere Kriterien, wie beispielsweise der kürzeste Abstand zum Gamut-Rand (Gamut-Grenzfläche) bei definierter Metrik können alternativ oder zusätzlich beigezogen werden. Handelt es sich bei dem ersten Farbraum um sRGB, so werden die zweiten Positionen bei oder in der Nähe der Grauachse vorzugsweise allein oder im Wesentlichen basierend auf den Transformationspositionen bestimmt. Vorzugsweise gilt dies sogar für einen wesentlichen oder überwiegenden Teil des Überlappungsteils, beispielsweise für bis zu 10%, 30%, 60% oder 80% des (insbesondere inneren Bereiches des) Überlappungsteils, wobei den übrigen Bereichen, also insbesondere am Rande des Überlappungsteils der Anteil der Modellpositionen an der Bestimmung der zweiten Positionen zunimmt. Dies kann beispielsweise so gestaltet werden, dass bei einer mathematischen Verknüpfung der Transformationspositionen und der Modellpositionen, um die zweiten Positionen zu erhalten, die mathematische Verknüpfung gewichtet erfolgt und das Gewicht für die Modellpositionen mit einem Abstand von der Grauachse zunimmt, während das Gewicht für die Transformationspositionen mit dem Abstand von der Grauachse abnimmt.

Alternativ oder zusätzlich können als (prägnante) Teile auch die Randflächen des Transformationsteils herangezogen werden. So kann beispielsweise mit abnehmendem Abstand von der nächsten Randfläche des Transformationsteils das Gewicht der Transformationspositionen abnehmen und das Gewicht der Modellpositionen zunehmen, wobei die Abnahme und Zunahme der Gewichte vorzugsweise symmetrisch ist.

Die vorgenannten Abstände werden dabei vorzugsweise im ersten Farbraum bestimmt, wie später anhand eines Beispiels gezeigt wird.

Vorzugsweise werden im Zentralbereich des Überlappungsteils oder im überwiegenden inneren Bereich des Überlappungsteils bei einer gewichteten mathematischen Verknüpfung die Transformationspositionen zur Bestimmung der zweiten Positionen stärker gewichtet als die Modellpositionen, um für den Zentralbereich eine mathematisch korrekte Wiedergabe der Farben zu erzielen. Der Randbereich des Überlappungsteils wird dann vorzugsweise so gestaltet, dass die Farbdarstellungsmöglichkeiten des Modellbilddarstellungssystems genutzt werden. Also werden dort vorzugsweise bei der Bestimmung der zweiten Positionen die Modellpositionen stärker betont oder stärker gewichtet als die Transformationspositionen.

Vorzugsweise ist die Beeinflussung der Bestimmung der zweiten Positionen durch die ersten Positionen, die Transformationspositionen und/oder durch die Modellpositionen stetig. Insbesondere ist die Positionsabhängigkeit der Bestimmung der zweiten Positionen stetig oder wird durch eine stetige Funktion beschrieben. Vorzugsweise ist auch zumindest die erste Ableitung dieser Funktion stetig. Die Funktion beschreibt vorzugsweise die Verknüpfung der zweiten Transformationspositionen und der Modellpositionen zur Bestimmung der zweiten Positionen. Werden hierin erste Positionen und zweite Positionen als zueinander entsprechend bezeichnet, so bedeutet dies, dass die zweiten Positionen aus den ersten Positionen durch das erfindungsgemäße Verfahren hervorgehen.

Vorteilhaft erfolgt die Verknüpfung, insbesondere mathematische Verknüpfung so, dass Positionswerte, die die Positionen der ersten Positionen, der Modellpositionen und/oder der Transformationspositionen beschreiben, insbesondere mathematisch verknüpft werden. Die ersten Positionen, Modellpositionen und/oder Transformationspositionen können beispielsweise durch Koordinaten in einem dreidimensionalen Raum oder durch Werte, die einen Vektor beschreiben, dargestellt werden.

Die Bestimmung der zweiten Positionen basierend auf ersten Positionen, den Transformationspositionen und/oder den Modellpositionen kann auch in Abhängigkeit von dem Bildinhalt erfolgen oder von Farben, Strukturen oder Mustern in Teilen des Bildes. Wird z.B. durch einen Muster- und/oder Zeichenerkennungsprozess ein Text als Bildinhalt erkannt, so werden die zweiten Positionen vorzugsweise allein oder überwiegend auf den Modellpositionen bestimmt, um einen möglichst guten Kontrast bei der Textwiedergabe zu erzielen. Alternativ oder zusätzlich kann die Gewichtung zu Gunsten der Modellpositionen in Abhängigkeit vom Bildinhalt zumindest verschoben werden. Entsprechend kann vorgegangen werden, wenn sich Teile des Bildes auf Text oder auf strukturierte Grafiken beziehen, die einen hohen lokalen Kontrast aufweisen. Auch in diesem Fall kann dann lokal beispielsweise eine Verschiebung der Gewichtung zu Gunsten der Modellpositionen erfolgen, um beispielsweise eine möglichst gute Kontrastwirkung zu erzielen.

Alternativ oder zusätzlich kann die Bestimmung der zweiten Positionen basierend auf den ersten Positionen, Transformationspositionen und/oder den Modellpositionen für unterschiedliche Farbeigenschaften (wie Helligkeit bzw. Luminanz, Farbsättigung und Farbton) unterschiedlich erfolgen. Entsprechend oder alternativ kann eine Verarbeitung der Positionswerte der Transformations- und/oder Modellpositionen je nachdem, welchen (Farb-)Kanal oder welcher Dimension im Farbraum sie zugeordnet sind, unterschiedlich erfolgen. Wird die Position im zweiten Farbraum beispielsweise durch ein Werttripel beschrieben, so kann beispielsweise einer der drei Werte sich auf die Helligkeit (Helligkeitspositionswert) beziehen, während sich ein zweiter Wert auf die Farbsättigung bezieht und ein dritter Wert auf den Farbton. Dies ist beispielsweise für den Lab-Raum der Fall. Für eine jede der Dimensionen des zweiten Farbraums können dann unterschiedliche Verknüpfungsvorschriften für die Transformations- und Modellpositionen gelten. Beispielsweise kann für Helligkeitspositionswerte (Koordinaten) die Verknüpfung in Abhängigkeit von entsprechenden Helligkeitspositionswerten der Transformationspositionen und Modellpositionen erfolgen. Die Wichtung kann in diesem Fall beispielsweise überwiegend oder allein in Abhängigkeit von dem Abstand der Helligkeitspositionswerte von der Grauwertachse oder beispielsweise in Abhängigkeit des minimalen Abstands der Transformationspositionen von der Grauwertachse erfolgen.

Andere Positionswerte (Koordinaten) der Transformations- und/oder Modellpositionen, die sich beispielsweise auf den Farbton oder die Farbsättigung beziehen und die im Folgenden Farbtonpositionswerte oder Farbsättigungspositionswerte genannt werden, können auf eine andere Art und Weise verknüpft werden, um einen Farbtonpositionswert oder Farbsättigungspositionswert für die zweiten Positionen zu bestimmen. Beispielsweise kann in diesem Fall die Wichtung in Abhängigkeit davon erfolgen, wie weit der Abstand zur nächstliegenden Grenzfläche des Transformationsteils ist.

Vorzugsweise ist das Modellbilddarstellungssystem ein idealisiertes Modell. Dies bedeutet, dass das idealisierte Modellbilddarstellungssystem vorzugsweise so gestaltet ist, dass es alle Farbwerte darstellen kann, die von beliebigen realen Bilddarstellungssystemen darstellbar sind. Anders ausgedrückt, der Gamut des idealisierten Modellbilddarstellungssystems umfasst vorzugsweise alle Gamute am Ausgang aller realen Bilddarstellungssysteme, insbesondere den Gamut aller möglichen in Betracht gezogenen Ausgangsmedien. Ein idealisiertes Modellbilddarstellungssystem wird beispielsweise dadurch modelliert, dass es kein Übersprechen zwischen den Spektren der Farben gibt. Durch diese Idealisierung wird der Vorteil erreicht, dass durch die Umwandlung der Bilddaten in die Modellpositionen zwar bereits eine Annäherung an ein reales Bilddarstellungssystem erzielt wird, aber dennoch keine Informationen verloren gehen, die später vom realen Bilddarstellungssystem genutzt werden könnten. Ein ideales Modellbilddarstellungssystem spiegelt also vorzugsweise die idealen Eigenschaften eines bestimmten Typs eines Bilddarstellungssystems wider, also beispielsweise die idealen Eigenschaften eines Fotodruckers oder Fotoprinters. Ist das reale System beispielsweise ein Monitor, so spiegelt das ideale Modellbilddarstellungssystem die idealen Eigenschaften eines Monitors beispielsweise wider.

Durch eine weitere Transformation der zweiten Positionen in einen dritten Farbraum kann dann eine gezielte Verkleinerung des Gamuts der zweiten Positionen vorgenommen werden, um eine optimale Anpassung an das reale Bilddarstellungssystem zu erzielen. Vorzugsweise ist der Gamut eines realen Bilddarstellungssystems kleiner als der Gamut des idealen modellierten Bilddarstellungssystems. Vorzugsweise umfasst also der durch den Modellteil abgedeckte Farbraum den Gamut des realen Bilddarstellungssystems. Um dann optimierte Bilddaten zu erhalten, können die zweiten Positionen, die außerhalb des Gamuts des realen Bilddarstellungssystems liegen, beispielsweise an den nächstliegenden Rand des Gamuts (darstellbaren Farbraums) des realen Bilddarstellungssystems transformiert werden. Da die Modellpositionen bereits die Eigenschaften des realen Bilddarstellungssystems annähernd (idealisiert) widerspiegeln und bei der Bestimmung der zweiten Positionen, insbesondere der am Rande des Gamuts liegenden Positionen, einen wesentlichen Einfluss ausüben, kommt es selbst bei dieser beispielhaft genannten, sehr einfach gestalteten Transformation in den dritten Farbraum zu nur geringen Verzerrungen, so dass im Hinblick auf die durch das reale Bilddarstellungssystem gegebenen Vorgaben optimierte Bilddaten erhalten werden.

So weit in dieser Anmeldung von nächstliegend oder nahe in Bezug auf Farbräume die Rede ist, bezieht sich dies vorzugsweise auf Farbabstände, wie sie nach CIE-Lab-Standards definiert sind, der sich auf das menschliche Farbempfinden bezieht.

Im folgenden wird eine Ausführungsform der Erfindung beschrieben. Dabei werden weitere Vorteile und Merkmale der vorliegenden Erfindung offenbart.

Fig. 1     zeigt die Vernetzung eines erfindungsgemäßen fotografischen Labors oder eines Fotodruckers mit Eingabegeräten und Ausgabegeräten.

Fig. 2     zeigt ein Modellierungsverfahren gemäß der europäischen Patentanmeldung EP 1 227 659 A1.

Fig. 3     zeigt einen zweiten Farbraum mit einem als sRGB bezeichneten Transformationsteil und einen als Fotopapier bezeichneten Modellteil.

Fig. 1 zeigt eine schematische Ansicht eines Farbmanagements, bei dem das Verfahren gemäß der Erfindung zum Einsatz kommt. Bei dem Farbmanagement dient in der Mitte ein gewünschter Farbraum oder Standardraum als gemeinsame Plattform (zweiter Farbraum). Vorzugsweise wird als Standardraum (zweiter Farbraum) der CIE-Lab-Farbraum gewählt. Dieser hat gewünschte Eigenschaften, nämlich er ist unabhängig vom Typ eines Farbstoff-Systems (z.B. Drucker mit Papier), das mit einer Bilddarstellungsvorrichtung, Farbstoffen und einem Medium arbeitet und deckt die Farbräume aller möglichen Farbstoff-Systeme ab. Die im Farbraum dargestellten Farbdaten eines spezifischen Bildes sind nicht vollständig unabhängig vom Typ der Geräte, die bei der Erfassung und Digitalisierung der Bildinformation verwendet wurden (z.B. Kamera, Filmscanner), da die Details eines in diesem Farbraum dargestellten Bildes den Farbtonumfang bzw. Gamut dieser Eingabegeräte offenbaren und da verschiedene Eingabegeräte typischerweise unterschiedliche Teile des Farbraums abschneiden oder verzerren. Als bevorzugte und wichtige Eigenschaft ist jedoch der zweite Farbraum so gestaltet, dass jede Farbe ihre eigene und gut definierte Position bzw. einen einzigartigen Bereich in dem Farbraum einnimmt. Vorzugsweise existieren weiter definierte Transformationen zwischen dem zweiten Farbraum und den verschiedenen Eingabe- oder Ausgabegeräten. Ausgabegeräte sind z.B. Farbstoff-Systeme, Monitore, digitale Speichermedien oder Netzwerkschnittstellen.

Vorzugsweise wird als zweiter Farbraum der CIE-Lab-Farbraum gewählt, der die folgenden Vorteile aufweist, oder ein Farbraum mit gleichen oder ähnlichen Vorteilen.

Der CIE-Lab-Farbraum ist an die Farbempfindlichkeit des menschlichen Auges angepasst. In dem Lab-Farbraum erscheint jedes Farbpaar, das um einen euklidischen Abstand 1 getrennt ist, für einen menschlichen Betrachter gleich weit voneinander entfernt. Ein mittlerer Betrachter ist dazu in der Lage, Farben bis zu etwa $\Delta E = [(\Delta L^2 + \Delta a^2 + \Delta b^2)]^{1/2} = 1$ zu unterscheiden. Die Helligkeit L wird von der chromatischen Information (Farbton und Sättigung) getrennt. Der Radius $[(a^2 + b^2)]^{1/2}$ in der (a,b)-Ebene ist ein Maß für die Farbsättigung. In der (a,b)-Ebene ist der Winkel mit der a-Achse ein Maß für den Farbton.

Ein weiterer Vorteil des CIE-Lab-Farbraums liegt darin, dass er nicht auf einen bestimmten Farbtonumfang bzw. Gamut begrenzt ist. Dies ist z.B. ein Unterschied zu dem sRGB-Farbraum, ausgenommen man lässt auch negative sRGB-Werte zu.

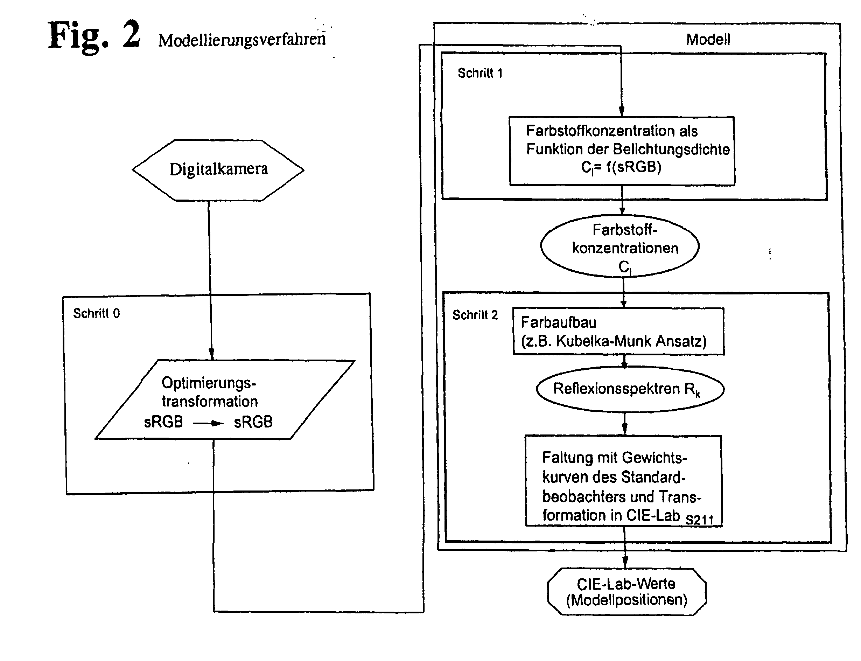

Im Folgenden wird beispielhaft an Hand von Fig. 2 die Informationsverarbeitung mittels dem Modellbilddarstellungssystem von einem Scanner oder einer Digitalkamera, der bzw. die RGB-Bilddaten ausgibt, die üblicherweise als sRGB-Bilddaten deklariert sind, zu CIE-Lab-Werten beschrieben. Das Bilddarstellungssystem, für das die Bilddaten optimiert werden sollen, ist beispielsweise ein Printer mit Fotopapier.

Bei dem Printer kann es sich beispielsweise um einen DMD-Printer handeln, bei dem Licht von einer Lichtquelle auf lichtempfindliches Fotopapier (z.B. Silberhalogenid-Fotopapier) projiziert wird. Bei dem DMD handelt es sich um ein Feld mit vielen kleinen Spiegeln, die jeweils um einen gewissen Winkel gekippt werden können. Das DMD-Feld wird verwendet, um das Papier pixelweise mit einer bestimmten Lichtmenge zu belichten. Verschiedene Farbfilter werden eingesetzt, um ein Belichtungslicht unterschiedlicher Farbe zu erzeugen (z.B. Rot, Grün und Blau). Die Farben Rot, Grün und Blau führen dann in dem lichtempfindlichen Papier zu den primären Farben Cyan, Magenta und Gelb.

Der Datenfluss von dem Scanner oder der Digitalkamera bis zu dem CIE-Lab-Farbraum gemäß dem Modellierungssystem wird im Folgenden anhand der Fig. 2 erläutert. In einem Schritt 0 werden suboptimale sRGB-Daten z. B. der Digitalkamera in optimierte sRGB-Daten transformiert, z.B. mit Hilfe eines bildabhängigen Optimierungsverfahrens. Diese Optimierung ist optional. Anschließend werden die sRGB-Daten beispielsweise kanalweise in Farbstoffkonzentrationen Ci in einem Schritt 1 umgerechnet. Dabei wird beispielsweise die folgende Kalibrationseigenschaft vorausgesetzt: Für einen gegebenen Kanal-Steuerwert di (mit i = sR, sG, sB; also der Rotkanal ist beispielsweise ein $d_{sR} = sR$), bestimmt man die Konzentrationen $C_i$ mit Hilfe einer Funktion f, die das Modellbilddarstellungssystem modelliert. Die Funktion f modelliert die Reaktion des Modellbilddarstellungssystems auf die Eingabe der Bildsteuerdaten

sRGB. Die Farbstoffkonzentrationen $C_i$ stellen Beispiele für Lichtmodulationswerte dar, die sich bei Eingabe der Bildsteuerdaten (sRGB) in das Modellbilddarstellungssystem ergeben. Wird also beispielsweise ein Tintenstrahldrucker verwendet oder wird ein Fotopapier belichtet, so stellt $C_i$ die Farbstoffkonzentration der Farbe i dar, die durch Ausspritzen einer bestimmten Farbstoffmenge aus einer Düse in Reaktion auf einen Kanal-Steuerwert $d_i$ erzeugt wird. Die Funktion f moduliert also die Erzeugung der Lichtmodulationswerte (Farbstoffkonzentrationen). Dadurch ist aber noch nicht der Farbwert modelliert, der bei Eingabe der Bildsteuerdaten in das Modellbilddarstellungssystem erzeugt wird. Hierzu ist der in der Figur 2 dargestellte Schritt 2 erforderlich, der den messbaren oder beobachtbaren Farbwert bei vorgegebenem Lichteinfallbedingungen und Beobachtungsbedingungen modelliert. Dies erfolgt im nachfolgenden Schritt 2 des Modellierungsverfahrens.

In einem nachfolgenden Schritt 2 des Modellierungsverfahrens werden also am Ende CIE-Lab-Werte (Modulationsfarbwerte) basierend auf den Farbstoffkonzentrationen vorhergesagt. Zusätzlich oder alternativ können auch Papierdichten CMY berechnet werden, wie sie von einem Densitometer gemessen würden.

Im Folgenden wird der in Fig. 2 gezeigte Schritt 2 beschrieben. Die Farbstoffkonzentrationen beschreiben die Lichtreflexionseigenschaften der erzeugten Farbstoffe. Mit diesem Satz von n Farbstoffkonzentrationen $C_i$ wird ein sich ergebendes Reflexionsspektrum $R(\lambda)d\lambda$ abgeleitet, wobei der Kubelka-Munk-Ansatz mit einer einzigen Konstante und mit einer vereinfachten Saunderson-Korrektur verwendet wird. Dieser Ansatz ist in Kang, H.R. (1997a), 2.6 Kubelka-Munk-Theorie, in: Color Technology for Electronic Imaging Devices, SPIE Optical Engineering Press (Washington, USA), Seiten 48-54, beschrieben. Das Modell von Kubelka-Munk stellt nur eine mögliche Realisation dar. Eine weitere Möglichkeit besteht z.B. in einem einfachen Modell, bei dem ein linearer Zusammenhang zwischen spektralen Farbkonzentrationen und spektralen Farbdichten hergestellt wird. Auch kann das Modell mit dem Kubelka-Munk-Ansatz erweitert werden, z.B. auf ein Drei-Farbschichten-Modell. Am Ende des zweiten Schrittes wird schließlich das Reflexionsspektrum $R(\lambda,)d\lambda$ mit dem relativen Spektrum der Beleuchtungsquelle z. B. ($D_{65}$, 2°) gewichtet und mit Farbabstimmfunktionen des CIE-XYZ-Raums gefaltet. Das sich ergebende CIE-XYZ-Triplet wird in Lab-Werte konvertiert, wobei die Standardformel und der Weißpunkt des Papiers bzw. Mediums verwendet wird. Auch können insbesondere im Rahmen des Schrittes 2 weitere Eigenschaften insbesondere des Mediums berücksichtigt werden, die das Erscheinungsbild beeinflussen, wie z.B., ob das Medium glänzend oder matt ist. Dementsprechend können z.B. unterschiedliche Reflexionsspektren oder Modellparameter gewählt werden.

Das Modell berechnet sich ergebende Lab-Werte, die die zweiten Positionen im zweiten Farbraum darstellen, für eine Mischung aus n Farbstoffen. Dabei wird zwischen Drucker-RGB-Eingangsdaten und Farbstoffkonzentrationen $C_i$ unterschieden. Alle Werte werden auf 1 normalisiert und liegen in dem Intervall [0,1]. Der Index i läuft von 1 bis n.

Aus den spektralen Reflexionsspektren können auch ANSI-Status-A-Papierdichten oder andere Farbdichtewerte, die von einem Fotodensitometer gemessen würden, berechnet werden, und zwar durch Faltung mit den entsprechenden Farbabstimmfunktionen.

Hinsichtlich weiterer Details des Modellierungsverfahrens wird auf die genannte EP 1 227 659 A1 verwiesen.

Das oben beschriebene Modellierungsverfahren stellt nur ein Beispiel dar. Auch andere Modellbilddarstellungssysteme, wie beispielsweise Tintenstrahldrucker aber auch Monitore, können entsprechend dem Modellierungsverfahren zu Grunde gelegt werden.

Im folgenden wird nun die Transformation der ersten Positionen in den zweiten Farbraum beschrieben, um die Transformationspositionen zu erhalten.

Diese Transformation wird vorteilhaft durch einen mathematischen Ausdruck beschrieben, der beispielsweise eine Transformation von dem sRGB-Farbraum in den zweiten Farbraum vornimmt. Beispielsweise kann für die Transformation von sRGB in CIE-Lab eine Standardformel verwendet werden. Dazu werden vorzugsweise zuerst die sRGB-Koordinaten in CIEXYZ-Koordinaten transformiert, indem die Definition des StandardsRGB-Farbraums verwendet wird. Darauf folgend werden die CIEXYZ-Koordinaten in CIE-Lab-Werte bei einer $D_{50}$-Beleuchtung konvertiert.

Bei einem Wertebereich von 0 ..... 255 für RGB-Werte, wird die Gamma-Funktion wie folgt berücksichtigt:

Wenn R/255,G/255,B/255 < 0.00304

$$255*R' = 12.92*(R/255)$$

$$255*G' = 12.92*(G/255)$$

$$255*B,' = 12.92*(B/255)$$

sonst

$$255*R' = 1.055*(R/255)^{1/2.4} - 0.055$$

$$255*G' = 1.055*(G/255)^{1/2.4} - 0.055$$

$$255*B' = 1.055*(B/255)^{1/2.4} - 0.055$$

So werden beispielsweise XYZ-Koordinaten aus den sRGB-Koordinaten gemäß der oben erwähnten Veröffentlichung von Mary Nielsen und Michael Stokes wie folgt gewonnen:

$$X = 0{,}4361 \cdot R' + 0{,}3851 \cdot G' + 0{,}1431 \cdot B';$$

$$Y = 0{,}2225 \cdot R' + 0{,}7169 \cdot G' + 0{,}0606 \cdot B';$$

$$Z = 0{,}0139 \cdot R' + 0{,}0971 \cdot G' + 0{,}7141 \cdot B'.$$

Die oben gewonnenen XYZ-Koordinaten können die Positionswerte für die zweiten Positionen darstellen. Vorzugsweise werden sie jedoch noch in den CIE-Lab-Raum transformiert. Wie dies vorzunehmen ist, ist beispielsweise in der oben erwähnten Veröffentlichung E. J. Giorgianni & T. E. Maddon beschrieben. Die CIE-Lab-Werte L, a und b werden aus X, Y und Z (Tristimuluswerte) wie folgt berechnet, wobei $X_n$, $Y_n$ und $Z_n$ die Tristimuluswerte des zugehörigen Referenz-Weiß bezeichnen:

$$L = 116\left(\frac{Y}{Y_n}\right)^{(1/3)} - 16 \qquad \text{für } \frac{Y}{Y_n} > 0.008856$$

$$L = 903.3\left(\frac{Y}{Y_n}\right) \qquad\qquad \text{für } \frac{Y}{Y_n} \leq 0.008856$$

und

$$a = 500\left[f\left(\frac{X}{X_n}\right) - f\left(\frac{Y}{Y_n}\right)\right]$$

$$b = 200\left[f\left(\frac{Y}{Y}\right) - f\left(\frac{Z}{Z}\right)\right] \qquad\qquad \{A4\}$$

wobei

$$f\left(\frac{X}{X_n}\right) = \left(\frac{X}{X_n}\right)^{(1/3)} \qquad\qquad \text{für } \frac{X}{X_n} > 0.008856$$

$$f\left(\frac{X}{X_n}\right) = 7.787\left(\frac{X}{X_n}\right) + \left(\frac{16}{116}\right) \qquad\qquad \text{für } \frac{X}{X_n} \leq 0.008856$$

$$f\left(\frac{Y}{Y_n}\right) = \left(\frac{Y}{Y_n}\right)^{(1/3)} \qquad\qquad \text{für } \frac{Y}{Y_n} > 0.008856$$

$$f\left(\frac{Y}{Y_n}\right) = 7.787\left(\frac{Y}{Y_n}\right) + \left(\frac{16}{116}\right) \qquad\qquad \text{für } \frac{Y}{Y_n} \leq 0.008856$$

$$f\left(\frac{Z}{Z_n}\right) = \left(\frac{Z}{Z_n}\right)^{(1/3)} \qquad\qquad \text{für } \frac{Z}{Z_n} > 0.008856$$

$$f\left(\frac{Z}{Z_n}\right) = 7.787\left(\frac{Z}{Z_n}\right) + \left(\frac{16}{116}\right) \qquad\qquad \text{für } \frac{Z}{Z_n} \leq 0.008856$$

Da auch vorzugsweise das Modellierungsverfahren analytische Funktionen einsetzt, ergibt sich, dass die mathematische Gewinnung der Transformationspositionen und der Modellpositionen durch analytische Funktionen beschrieben werden können. Anders ausgedrückt, erfordert das Mischen oder Verknüpfen vorzugsweise nur analytische Funktionen. Insbesondere kann die Bestimmung der zweiten Positionen aus den Bilddaten basierend auf den Transformationspositionen und Modellpositionen durch eine einzige (mathematisch zusammengefasste) Transformation erfolgen.

Die verwendeten Transformationen können demnach vorzugsweise parametrisiert werden. Somit ist es möglich, ihr Verhalten je nach Wunsch zu gestalten. Interpolationsalgorithmen sind somit vorzugsweise nicht erforderlich. Dies ist bei der zum Mischen erforderlichen Gamut-Abbildung sehr hilfreich. Denn dort ist eine genaue Kenntnis der Gamut-Grenzen sehr vorteilhaft, um nummerische Instabilitäten in der Nähe der Gamut-Grenzen zu vermeiden.

Durch das erfindungsgemäße Verfahren werden verschiedene, miteinander konkurrierende Farbmanagementerwartungen kombiniert und in Einklang gebracht. Gleichzeitig werden Nachteile der verschiedenen Verfahren nach dem Stand der Technik vermieden. Am Eingang wird vorzugsweise für einen wesentlichen Teil oder den Großteil des Farbraums z. B. bis zu 10%, 30%, 60% oder 90% des Farbraums (beispielsweise des Innenbereichs des Überlappungsteils) die wissenschaftlich korrekte Transformation von sRGB zu den jeweiligen PCS-Koordinaten (beispielsweise CIE-Lab) verwendet. Vorzugsweise wird nur in der Nähe stark gesättigter Farben der Farbraum in Richtung zu den Papierfarben "verbogen". Mit diesem Kompromiss kann die Erwartung der Verbraucher erfüllt, werden, dass grafische Bilder oder Text, die den fotografischen Bildern hinzugefügt sind, mit gesättigten Papierfarben gedruckt werden, während der übrige Rest des Bildes vorzugsweise unter Verwendung von Standard-Farbmanagementlösung gedruckt wird.

Durch das Modellierungsverfahren werden bei dem bevorzugten Einsatz eines idealisierten Modells (beispielsweise kein Farbübersprechen) die Vorteile des in der Einleitung unter Punkt 3 beschriebenen Verfahrens nachgeahmt. Durch die Verwendung des idealisierten Modells wird aber im Gegensatz zu dem Verfahren nach Punkt 3 eine größere Flexibilität bei wechselnden Ausgabegeräten erzielt.

Durch das oben beschriebene Modellierungsverfahren werden also bevorzugt CIE-Lab-Werte bei einer bestimmten Beleuchtung (z.B. $D_{50}$-Beleuchtung) gewonnen. Durch die oben beschriebene Transformation von sRGB in den CIE-Lab-Farbraum, bei der bevorzugt die Farbwerte erhalten bleiben, werden ebenfalls bevorzugt CIE-Lab-Werte bei der gleichen Beleuchtung, also beispielsweise $D_{50}$-Beleuchtung, gewonnen.

Um die oben beschriebene Vermischung bzw. Verknüpfung der Modellpositionen und Transformationspositionen vorzunehmen, wird vorzugsweise wie folgt vorgegangen.

Bevorzugt werden die sRGB-Koordinaten auf einen Wertebereich von 0 bis 1 normalisiert. Dann werden bevorzugt zwei Abstände in der Metrik des sRGB-Würfels bestimmt:

- Der Abstand eines sRGB-Bilddatums (erste Position) zu der nächstliegenden sRGB- -Randfläche ist $\Delta_{Fläche}$ (auch "sRGB-Oberfläche" genannt) . Der minimale Abstand von $\Delta_{Fläche} = 0$ wird an der sRGB-Randfläche erreicht. Für einen Punkt mit sRGB-Koordinaten (0,5, 0,5, 0,5) beträgt der minimale Abstand $\Delta_{Fläche} = 0,5$, wobei dieser Punkt den maximalen Abstand zur sRGB-Randfläche von allen sRGB-Punkten hat.
- Der Abstand desselben sRGB-Bilddatums (denselben ersten Position) zu der Grauachse wird als $\Delta$Grau bezeich-

net. Für Punkte auf der Grauachse ergibt sich ΔGrau = 0. Für Ecken des sRGB-Würfels ergibt sich, abgesehen von schwarz und weiß, ein Wert von $\Delta_{\text{Grau}} = (2/3)^{1/2}$.

Für die Vermischung oder Verknüpfung werden Wichtungsfaktoren $w_{\text{Fläche}}$ und $w_{\text{Grau}}$ für das sRGB-Bilddatum wie folgt bestimmt:

$$w_{\text{Grau}} = 1 - \exp(-\Delta_{\text{Grau}} / \sigma_{\text{Grau}})$$

$$w_{\text{Fläche}} = m[\exp(-(\Delta_{\text{Fläche}} - d)^2 / \sigma_{\text{Fläche}}) - \exp(-(0,5 - d)^2 / \sigma_{\text{Fläche}})]$$

In der obigen Gleichung bezeichnen m, d, $\sigma_{\text{Fläche}}$ und $\sigma_{\text{Grau}}$ Konstanten. Falls $(L_1, a_1, b_1)$ den Lab-Wert bezeichnet, der sich aus der Transformation des sRGB-Bilddatums (erste Position im ersten Farbraum) in den Lab-Farbraum ergibt, also eine Transformationsposition bezeichnet, und $(L_2, a_2, b_2)$ eine Modellposition bezeichnet, die sich mittels des Modellierungsverfahren aus demselben sRGB-Bilddatum (erste Position) ergibt, so kann ein (L, a, b) -Wert, der eine zweite Position bezeichnet, die der ersten Position entspricht, beispielsweise wie folgt bestimmt werden:

$$L = (1 - w_{\text{Grau}}) L_1 + w_{\text{Grau}} L_2$$

$$a = (1 - w_{\text{Fläche}}) a_1 + w_{\text{Fläche}} a_2$$

$$b = (1 - w_{\text{Fläche}}) b_1 + w_{\text{Fläche}} b_2$$

Beim obigen Verknüpfungsverfahren werden also die jeweilig sich entsprechenden Kanäle der Modellpositionen und der Transformationspositionen, also der L-Kanal, der a-Kanal und der b-Kanal, untereinander verknüpft. Der die Helligkeit betreffende L-Kanal wird in Abhängigkeit von einem Abstand zur Grauachse bestimmt. Für die anderen beiden Kanäle erfolgt die Gewichtung in Abhängigkeit vom Abstand zur Gamutfläche des normalisierten RGB-Würfels. Üblicherweise ergeben sich aus einer ersten Position (einem sRGB-Bilddatum) durch das Modellierungsverfahren eine Modellposition mit Koordinaten im zweiten Farbraum, die sich von den Koordinaten der entsprechenden Transformationsposition unterscheiden. Zur Berechnung von $\Delta_{\text{Fläche}}$ und $\Delta_{\text{Grau}}$ und damit von $w_{\text{Grau}}$ und $w_{\text{Fläche}}$ kann alternativ oder zusätzlich zu dem oben beschriebenen Verfahren mindestens eine der beiden möglichen, üblicherweise unterschiedlichen Koordinaten verwendet werden. Wobei dann die Bestimmung der Abstände nicht im ersten Farbraum (sRGB) sondern im zweiten Farbraum (Lab) erfolgt.

**Patentansprüche**

1. Verfahren zum Verarbeiten von Bilddaten, die Farbwerte eines Bildes darstellen, um eine farblich möglichst optimale Wiedergabe des Bildes durch ein Bilddarstellungssystem, insbesondere durch einen Fotoprinter oder ein Fotolabor in Antwort auf die Bilddaten zu erzielen, mit folgenden Schritten:

   a) die Bilddaten, die erste Positionen in einem ersten Farbraum darstellen, werden empfangen;
   b) die ersten Positionen werden in Transformationspositionen transformiert, die Positionen in einem zweiten Farbraum darstellen;
   die Bilddaten, die erste Positionen in dem ersten Farbraum darstellen, werden als Bildsteuerdaten in ein Modellbilddarstellungssystem eingegeben; und durch das Modellbilddarstellungssystem wird die Antwort des Bilddarstellungssystems auf die Bildsteuerdaten so modelliert, dass das Modellbilddarstellungssystem die Antwort als Modellpositionen ausgibt, die die vom Modellbilddarstellungssystem in Antwort auf die Eingabe der Bildsteuerdaten erzeugten Farbwerte als Positionen in dem zweiten Farbraum darstellen;
   c) basierend auf den Transformationspositionen und auf den Modellpositionen werden zweite Positionen im zweiten Farbraum bestimmt, um optimierte Bilddaten zur Ansteuerung des Bilddarstellungssystems zu bestimmen, wobei jeweils zur Bestimmung der zweiten Positionen Positionswerte solcher Modellpositionen und Transformationspositionen miteinander verknüpft werden, die sich aus demselben Bilddatum ergeben, um so jedem Bilddatum eine zweite Position eindeutig zuzuordnen.

**2.** Verfahren nach Anspruch 1, bei welchem die Bilddaten Steuerwerte in einem vorgegebenen Steuerwerteraum annehmen können und das Modellbilddarstellungssystem so gestaltet ist, dass es in Antwort auf alle möglichen Steuerwerte des Steuerwerteraums zweite Modellpositionen erzeugt, die Farbwerte darstellen, die den durch das Modellbilddarstellungssystem darstellbaren Teil des zweiten Farbraums zumindest in etwa aufspannen oder diesen Teil umfassen.

**3.** Verfahren nach Anspruch 1 oder 2, bei welchem die Bilddaten Steuerwerte in einem vorgegebenen Steuerwerteraum annehmen können und, falls alle Steuerwerte des Steuerwerteraums dem Schritt b) unterzogen werden, die Transformationspositionen einen Transformations-Teil des zweiten Farbraums aufspannen und die Modellpositionen einen Modell-Teil des zweiten Farbraums aufspannen, wobei sich der Transformations-Teil und der Modell-Teil in einem Überlappungsteil des zweiten Farbraums überlappen, wobei

i) die Bestimmung der zweiten Positionen durch die Transformationspositionen stärker beeinflusst wird als durch die Modellpositionen, wenn sich die zweiten Positionen näher bei der Grauwertachse des Überlappungsteils befinden und/oder wenn die den zweiten Positionen entsprechenden ersten Positionen näher bei der Grauwertfläche des durch die empfangenen Bilddaten aufspannbaren Teil des ersten Farbraums befinden; und/oder

ii) die Bestimmung der zweiten Positionen stärker durch die Modellpositionen beeinflusst wird als durch die Transformationspositionen, wenn sich die zweiten Positionen am Rand des Überlappungsteils befinden und/oder wenn die den zweiten Positionen entsprechenden ersten Positionen sich näher am Rand des durch die empfangenen Bilddaten aufspannbaren Teil des ersten Farbraums befinden; und/oder

iii) die Bestimmung der zweiten Positionen durch die Transformationspositionen stärker beeinflusst wird als durch die Modellpositionen, wenn sich die zweiten Positionen näher am Zentrum des Überlappungsteils befinden und/oder wenn die den zweiten Positionen entsprechenden ersten Positionen sich näher am Zentrum des durch die empfangenen Bilddaten aufspannbaren Teil des ersten Farbraums befinden.

**4.** Verfahren nach Anspruch 3, bei welchem die Beeinflussung der Bestimmung der zweiten Positionen durch die Transformationspositionen und durch die Modellpositionen so erfolgt, dass die durch die zweiten Positionen beschriebenen Farbwerte eine stetige Funktion der Bildsteuerwerte sind, wobei bevorzugt dies auch für die erste Ableitung der Funktion gilt.

**5.** Verfahren nach Anspruch 4, bei welchem zu einer mathematischen Verknüpfung diejenigen Positionswerte der zweiten Positionen, die die Helligkeit beschreiben, aus den entsprechenden Positionswerten der Transformationspositionen und Modellpositionen mittels einer ersten Wichtung bestimmt werden, wobei diese erste Wichtung von der Lage der entsprechenden ersten Positionen und/oder Transformationspositionen und/oder Modellpositionen relativ zu der Grauwertachse oder zu einem oder mehreren Punkten auf der Grauwertachse erfolgt; und/oder
    bei welchem zur mathematischen Verknüpfung diejenigen Positionswerte der zweiten Positionen, die den Farbton und/oder die Farbsättigung beschreiben, aus den entsprechenden Positionswerten der Transformationspositionen und Modellpositionen mittels einer zweiten Wichtung bestimmt werden, wobei diese zweite Wichtung in Abhängigkeit der Lage der entsprechenden ersten Positionen, Transformationspositionen und/oder Modellpositionen von der nächstliegenden Grenzfläche oder Grenze durch die jeweiligen Positionen aufspannbaren Teils des jeweiligen Farbraums erfolgt.

**6.** Verfahren nach einem der Ansprüche 1 bis 5, bei welchem der erste Farbraum ein geräteabhängiger Farbraum, insbesondere RGB-Farbraum ist und der zweite Farbraum ein geräteunabhängiger Farbraum, insbesondere CIE Lab-Farbraum oder CIEXYZ-Farbraum ist, bei welchem das Modellbilddarstellungssystem ein idealisiertes Modell des Bilddarstellungssystems darstellt, und die zweiten Positionen in dritte Positionen transformiert werden, die Farbwerte in einem dritten Farbraum darstellen, der den Farbraum des nicht-idealisierten Bilddarstellungssystems widerspiegelt.

**7.** Programm, das, wenn es in einen Computer geladen wird oder auf diesem läuft, den Computer veranlasst das Verfahren nach einem der Ansprüche 1 bis 6 auszuführen.

**8.** Computerspeichermedium mit einem Programm nach Anspruch 7.

**9.** Fotoprinter oder Fotolabor, insbesondere Großlabor oder Minilab mit einer Einheit zum Empfangen von Bilddaten; mit einer Datenverarbeitungseinheit, die die empfangenen Bilddaten gemäß dem Verfahren nach einem der Ansprüche 1 bis 6 verarbeitet, um die Bilddaten zu optimieren;

**EP 1 370 071 B1**

mit einem Bildaufzeichnungssystem, das ein fotografisches Bild basierend auf den optimierten Bilddaten auf einem Aufzeichnungsmedium, insbesondere Papier oder Fotopapier, erzeugt.

**Claims**

1. A method for processing image data which represent colour values of an image in order to obtain the optimum possible reproduction of the image with regard to colour by means of an image representation system, particularly by means of a photographic printer or a photographic laboratory in response to the image data, comprising the following steps:

   a) the image data which represent first positions in a first colour space are received;
   b) the first positions are transformed into transformation positions which represent positions in a second colour space;
   the image data which represent first positions in the first colour space are input as image control data into a model image representation system; and by means of the model image representation system, the response of the image representation system to the image control data is modelled such that the model image representation system issues the response as model positions which represent the colour values produced by the model image representation system in response to the input of the image control data as positions in the second colour space;
   c) based on the transformation positions and the model positions, second positions in the second colour space are determined in order to determine optimised image data for controlling the image representation system, position values of such model positions and transformation positions that result from the same image datum being combined together in each case to determine the second positions, so as thereby to assign a second position specifically to each image datum.

2. A method according to Claim 1, in which the image data may assume control values in a prescribed control value space, and the model image representation system is designed such that it produces, in response to all possible control values of the control value space, second model positions which represent colour values that at least approximately span the part of the second colour space capable of being represented by the model image representation system, or include this part.

3. A method according to Claim 1 or 2, in which the image data may assume control values in a prescribed control value space and, if all the control values of the control value space are subjected to step b), the transformation positions span a transformation part of the second colour space and the model positions span a model part of the second colour space, the transformation part and the model part overlapping in an overlap part of the second colour space, wherein

   i) the determining of the second positions is influenced more strongly by the transformation positions than by the model positions if the second positions are situated nearer with respect to the grey value axis of the overlap part and/or if the first positions corresponding to the second positions are situated nearer with respect to the grey value surface of the part of the first colour space which may be spanned by the received image data; and/or
   ii) the determining of the second positions is influenced more strongly by the model positions than by the transformation positions if the second positions are situated on the margin of the overlap part and/or if the first positions corresponding to the second positions are situated nearer to the margin of the part of the first colour space which may be spanned by the received image data; and/or
   iii) the determining of the second positions is influenced more strongly by the transformation positions than by the model positions if the second positions are situated nearer to the centre of the overlap part and/or if the first positions corresponding to the second positions are situated nearer to the centre of the part of the first colour space which may be spanned by the received image data.

4. A method according to Claim 3, in which the influencing of the determining of the second positions by the transformation positions and by the model positions is effected such that the colour values described by the second positions are a continuous function of the image control values, this preferably also applying to the first derivative of the function.

5. A method according to Claim 4, in which, with regard to a mathematical combination, those position values of the second positions that describe the brightness are determined from the corresponding position values of the trans-

15

formation positions and model positions by means of a first weighting, this first weighting being effected from[1] the position of the corresponding first positions and/or transformation positions and/or model positions relative to the grey value axis or to one or more points on the grey value axis; and/or

in which, with regard to the mathematical combination, those position values of the second positions that describe the hue and/or the colour saturation are determined from the corresponding position values of the transformation positions and model positions by means of a second weighting, this second weighting being effected in dependence on the position of the corresponding first positions, transformation positions and/or model positions from the nearest boundary surface or boundary [of the][2] part of the respective colour space which may be spanned by the respective positions.

6. A method according to one of Claims 1 to 5, in which the first colour space is a device-dependent colour space, in particular RGB colour space, and the second colour space is a device-independent colour space, in particular CIE Lab colour space or CIEXYZ colour space, in which the model image representation system represents an idealised model of the image representation system, and the second positions are transformed into third positions which represent colour values in a third colour space which reflects the colour space of the non-idealised image representation system.

7. A program which, when loaded into a computer or running on the said computer, initiates the computer to carry out the method according to one of Claims 1 to 6.

8. A computer storage medium with a program according to Claim 7.

9. A photographic printer or photographic laboratory, particularly a large-scale laboratory or minilab with a unit for receiving image data;

comprising a data processing unit which processes the received image data in accordance with the method according to one of Claims 1 to 6 in order to optimise the image data;

comprising an image recording system which produces a photographic image based on the optimised image data on a recording medium, particularly paper or photographic paper.

**Revendications**

1. Procédé pour le traitement de données d'image qui correspondent aux valeurs chromatiques d'une image, afin d'obtenir une reproduction chromatiquement aussi optimale que possible de l'image par un système de restitution d'image, en particulier par une imprimante photographique ou un laboratoire photographique, en réponse aux données d'image, comprenant les étapes suivantes :

a) les données d'image qui correspondent à des premières positions dans un premier espace chromatique sont reçues ;

b) les premières positions sont transformées en positions de transformation qui correspondent à des positions dans un second espace chromatique ; les données d'image correspondant à des premières positions dans un premier espace chromatique sont entrées dans un système de restitution d'image modèle en tant que données de commande d'image et, par l'intermédiaire du système de restitution d'image modèle, la réponse du système de restitution d'image aux données de commande d'image est modélisée de façon que le système de restitution d'image modèle émette la réponse en tant que positions modèles qui correspondent aux valeurs chromatiques produites par le système de restitution d'image modèle en réponse à l'entrée des données de commande d'image en tant que positions dans le second espace chromatique ;

c) sur la base des positions de transformation et des positions modèles, des deuxièmes positions sont déterminées dans le second espace chromatique afin de déterminer des données d'image optimisées pour commander le système de restitution d'image, des valeurs de position de ces positions modèles et de ces positions de transformation provenant de la même donnée d'image étant combinées entre elles pour la détermination de chacune des deuxièmes positions, afin d'attribuer ainsi de manière univoque une seconde position à chaque donnée d'image.

2. Procédé selon la revendication 1, dans lequel les données d'image peuvent accepter des données de commande dans un espace de données de commande prédéfini, et le système de restitution d'image modèle est conçu de

---

[1] The meaning of 'von' is not entirely clear - there may be an omission in the source document, e.g. 'abhängig von' [in dependence on].
[2] The translator has inserted 'des' [of the] after 'Grenze' [boundary] to make the sentence translatable.

façon à produire, en réponse à toutes les données de commande possibles de l'espace de données de commande, des deuxièmes positions modèles correspondant à des valeurs chromatiques qui recouvrent au moins approximativement la partie du second espace chromatique restituable par le système de restitution d'image modèle ou englobent cette partie.

3. Procédé selon la revendication 1 ou 2, dans lequel les données d'image peuvent accepter des données de commande dans un espace de données de commande prédéfini et, si toutes les données de commande de l'espace de données de commande sont soumises à l'étape b), les positions de transformation recouvrent une partie de transformation du second espace chromatique et les positions modèles recouvrent une partie de modèle du second espace chromatique, la partie de transformation et la partie de modèle se chevauchant dans une partie de chevauchement du second espace chromatique,

i) la détermination des deuxièmes positions étant plus fortement influencée par les positions de transformation que par les positions modèles lorsque les deuxièmes positions se trouvent plus près de l'axe des gris de la partie de chevauchement et/ou lorsque les premières positions correspondant aux deuxièmes positions se trouvent plus près de la surface des gris de la partie du premier espace chromatique recouvrable par les données d'image reçues ; et/ou
ii) la détermination des deuxièmes positions étant plus fortement influencée par les positions modèles que par les positions de transformation lorsque les deuxièmes positions se trouvent au bord de la partie de chevauchement et/ou lorsque les premières positions correspondant aux deuxièmes positions se trouvent plus près du bord de la partie du premier espace chromatique recouvrable par les données d'image reçues ; et/ou
iii) la détermination des deuxièmes positions étant plus fortement influencée par les positions de transformation que par les positions modèles lorsque les deuxièmes positions se trouvent plus près du centre de la partie de chevauchement et/ou lorsque les premières positions correspondant aux deuxièmes positions se trouvent plus près du centre de la partie du premier espace chromatique recouvrable par les données d'image reçues.

4. Procédé selon la revendication 3, dans lequel la détermination des deuxièmes positions par les positions de transformation et par les positions modèles est influencée de façon que les valeurs chromatiques décrites par les deuxièmes positions soient une fonction continue des valeurs de commande d'image, cela valant aussi de préférence pour la dérivée première de la fonction.

5. Procédé selon la revendication 4, dans lequel, pour une combinaison mathématique, les valeurs de position des deuxièmes positions qui décrivent la luminosité sont déterminées à partir des valeurs de position correspondantes des positions de transformation et des positions modèles au moyen d'une première pondération, cette première pondération s'effectuant selon la place des premières positions et/ou des positions de transformation et/ou des positions modèles correspondantes par rapport à l'axe des gris ou à un ou plusieurs points sur l'axe des gris ; et/ou
dans lequel, pour la combinaison mathématique, les valeurs de position des deuxièmes positions qui décrivent la tonalité chromatique et/ou la saturation chromatique sont déterminées à partir des valeurs de position correspondantes des positions de transformation et des positions modèles au moyen d'une seconde pondération, cette seconde pondération s'effectuant en fonction de la place des premières positions, des positions de transformation et/ou des positions modèles correspondantes par rapport à l'interface ou à la limite la plus proche de la partie de l'espace chromatique respectif recouvrable par les positions respectives.

6. Procédé selon une des revendications 1 à 5, dans lequel le premier espace chromatique est un espace chromatique dépendant de l'appareil, en particulier un espace chromatique RVB, et le second espace chromatique est un espace chromatique indépendant de l'appareil, en particulier un espace chromatique CIE Lab ou un espace chromatique CIE XYZ, dans lequel le système de restitution d'image modèle correspond à un modèle idéalisé du système de restitution d'image, et les deuxièmes positions sont transformées en troisièmes positions qui correspondent à des valeurs chromatiques dans un troisième espace chromatique qui reflète l'espace chromatique du système de restitution d'image non idéalisé.

7. Programme qui, lorsqu'il est chargé ou exécuté dans un ordinateur, commande à l'ordinateur de mettre en oeuvre le procédé selon une des revendications 1 à 6.

8. Support de mémoire d'ordinateur avec un programme selon la revendication 7.

9. Imprimante photographique ou laboratoire photographique, en particulier grand laboratoire ou mini-laboratoire, avec un module pour recevoir des données d'image ;

avec un module de traitement de données qui traite les données d'image reçues suivant le procédé selon une des revendications 1 à 6 afin d'optimiser les données d'image ;

avec un système de reproduction d'image qui, sur la base des données d'image optimisées, reproduit une image photographique sur un support de reproduction, en particulier sur du papier ou du papier photographique.

Fig. 1

# Fig. 2 Modellierungsverfahren

Digitalkamera

**Schritt 0**
Optimierungs-transformation
sRGB $\longrightarrow$ sRGB

**Modell**

**Schritt 1**
Farbstoffkonzentration als Funktion der Belichtungsdichte
$C_i = f(sRGB)$

Farbstoff-konzentrationen $C_i$

**Schritt 2**
Farbaufbau
(z.B. Kubelka-Munk Ansatz)

Reflexionsspektren $R_k$

Faltung mit Gewichts-kurven des Standard-beobachters und Trans-formation in CIE-Lab $S211$

CIE-Lab-Werte (Modellpositionen)

Fig. 3